# EUROPEAN PATENT APPLICATION

(11) **EP 4 800 282 A1**
(43) Date of publication of application: **02.09.2026**
(21) Application number: 26153351.7
(22) Date of filing: 22.01.2026
(51) Int. Cl.: F16L 55/033, F02M 35/12, F15D 1/04, F16L 43/00

(54) **PIPING SYSTEM, PIPING MEMBER, PROTRUDING MEMBER**

(30) Priority: 27.02.2025 JP 2025029743
(71) Applicant: Panasonic Housing Solutions Co., Ltd., Kadoma-shi, Osaka 571-8686 (JP)
(72) Inventor: HASHIMOTO, Masayuki, Osaka 571-0057 (JP); NISHIMOTO, Mai, Osaka 571-0057 (JP)
(74) Representative: Appelt, Christian W.

(57) **Abstract**

A piping system (1) comprises a rectangular-shaped straight piping member (3) having a rectangular shape and connected to a downstream end of a bend member (4), and including a first inner side surface (30a) and a second inner side surface (30b) each having a planar shape and corresponding respectively to an inner circumferential side and an outer circumferential side of the bend member (4), and a protruding member (5) comprising a top (5e) positioned between a first end (5a) and a second end (5b) to minimize a flow channel cross-sectional area of the straight piping member (3), and disposed on the first inner side surface (30a) of the straight piping member (3) so that the first end (5a) is positioned at the downstream end of the bend member (4). When a distance between the first end (5a) and the second end (5b) in a first direction along a center axis of the straight piping member (3) is denoted by "L" and a distance between the first end (5a) and the top (5e) in the first direction is denoted by "L1", 0.05L ≤ L1 ≤ 0.4L, when a maximum internal dimension of the straight piping member (3) is denoted by "A", 0.3A ≤ L ≤ 2A, when an internal dimension of the straight piping member (3) in a second direction in which the first and the second inner side surface (30a, 30b) face each other is denoted by "B" and an internal dimension of the straight piping member in a third direction orthogonal to the first direction and the second direction respectively is denoted by "C", "A" is the larger of "B" and "C", when a height at the top (5e) in the protruding member is denoted by "h", 0.1B ≤ h ≤ 0.5B, and when a width of the protruding member (5) is denoted by "w", 0.8C ≤ w ≤ C.

## Description

### TECHNICAL FIELD

The present disclosure relates to piping systems, piping members, and protruding members.

### BACKGROUND ART

Patent Document 1 discloses a silencing device. The silencing device disclosed in Patent Document 1 is characterized by disposing a guide block with a semicircular cross-sectional shape and sound-absorbing function on an inner circumferential surface on the downstream side of the inner bend of a duct.

### PRIOR ART DOCUMENTS

### PATENT DOCUMENTS

Patent Document 1: JP 2002-156977 A

### SUMMARY OF THE INVENTION

### PROBLEMS TO BE SOLVED BY THE INVENTION

According to the techniques disclosed in patent document 1, the loss of fluids becomes relatively large.

The present disclosure provides a piping system, a piping member, and a protruding member which can reduce the loss of fluids.

### SOLUTIONS TO THE PROBLEMS

A piping system according to one aspect of the present disclosure is a piping system transporting fluid, and includes: a bend member for changing a direction of a flow channel, the bend member being rectangular-shaped; a straight piping member having a rectangular shape and connected to a downstream end of the bend member, and including a first inner side surface and a second inner side surface each having a planar shape and corresponding respectively to an inner circumferential side and an outer circumferential side of the bend member; and a protrude member including a first end directed toward the bend member and a second end directed away from the bend member, and disposed on the first inner side surface of the straight piping member so that the first end is positioned at the downstream end of the bend member, the protrude member including a top positioned between the first end and the second end to minimize the flow channel cross-sectional area of the straight piping member, wherein: when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L; when a maximum internal dimension of the straight piping member is denoted by "A", 0.3A ≤ L ≤ 2A; when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C"; when a height at the top in the protrude member is denoted by "h", 0.1B ≤ h ≤ 0.5B; and when a width of the protrude member is denoted by "w", 0.8C ≤ w ≤ C.

A piping member according to one aspect of the present disclosure is a piping member forming a part of a piping system transporting fluid, including: a straight piping member having a rectangular shape and connected to a downstream end of a bend member having a rectangular shape for changing a direction of a flow channel, and including a first inner side surface and a second inner side surface each having a planar shape and corresponding respectively to an inner circumferential side and an outer circumferential side of the bend member; a protrude member including a first end directed toward the bend member and a second end directed away from the bend member, and disposed on the first inner side surface of the straight piping member so that the first end is positioned at the downstream end of the bend member, the protrude member comprising a top positioned between the first end and the second end to minimize the flow channel cross-sectional area of the straight piping member, wherein: when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L; when a maximum internal dimension of the straight piping member is denoted by "A", 0.3A ≤ L ≤ 2A; when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C"; when a height at the top in the protrude member is denoted by "h", 0.1B ≤ h ≤ 0.5B; when a width of the protrude member is denoted by "w", 0.8C ≤ w ≤ C; and when a length of the straight piping member is denoted by "Lp", L ≤ Lp ≤ 3L.

A protruding member according to one aspect of the present disclosure is a protrude member disposed on an inner circumferential surface of a straight piping member connected to a downstream end of a bend member for changing a direction of a flow channel, the straight piping member being rectangular-shaped, the bend member being rectangular-shaped, wherein: the straight piping member includes a first inner side surface and a second inner side surface each having a planar shape and corresponding respectively to an inner circumferential side and an outer circumferential side of the bend member; the protrude member includes a first end directed toward the bend member and a second end directed away from the bend member, is disposed on the first inner side surface of the straight piping member so that the first end is positioned at the downstream end of the bend member, and comprises a top positioned between the first end and the second end to minimize the flow channel cross-sectional area of the straight piping member; when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L; when a maximum internal dimension of the straight piping member is denoted by "A", 0.3A ≤ L ≤ 2A; when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C"; when a height at the top in the protrude member is denoted by "h", 0.1B ≤ h ≤ 0.5B; and when a width of the protrude member is denoted by "w", 0.8C ≤ w ≤ C.

### EFFECTS OF THE INVENTION

Aspects of the present disclosure enable reducing the loss of fluids.

### BRIEF DESCRIPTION OF THE DRAWINGS

Fig. 1 is a perspective view of a piping member of a piping system according to one Embodiment.
Fig. 2 is an exploded perspective view of the piping member of the piping system according to above Embodiment.
Fig. 3 is a cross-sectional view of the piping member of the piping system according to above Embodiment.
Fig. 4 is a cross-sectional view along line D-D in Fig. 3.
Fig. 5 is a cross-sectional view of a portion of the piping member according to above Embodiment, with a part cut away.
Fig. 6 is a cross-sectional view along line E-E in Fig. 3.
Fig. 7 is a cross-sectional view of a piping member of a piping system according to Variations 1.
Fig. 8 is a cross-sectional view of a portion of the piping member according to Variations 1, with a part cut away.
Fig. 9 is another cross-sectional view of a piping member of a piping system according to Variations 1.
Fig. 10 is a cross-sectional view of a piping member of a piping system according to Variations 2.

### DETAILED DESCRIPTION

Below, embodiments will be described in detail with reference to the drawings as appropriate. However, unnecessarily detailed descriptions may be omitted. For example, detailed explanations of well-known matters or redundant descriptions of substantially identical components may be omitted. This is to avoid unnecessarily redundant explanations and to facilitate understanding by those skilled in the art. It should be noted that the inventor(s) provide the accompanying drawings and the following descriptions to ensure that those skilled in the art can sufficiently understand this disclosure, and it is not intended to limit the subject matter set forth in the claims by these descriptions or drawings.

Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.

Note that, in the following description, if it is necessary to distinguish a plurality of components from each other, suffixes, such as, "-1", "-2", or the like are attached to reference signs of such components. if there is no need to distinguish such components from each other, such suffixes, such as, "-1", "-2", or the like, may be omitted in consideration of readability of texts.

### [1. EMBODIMENT]

### [1.1. CONFIGURATIONS]

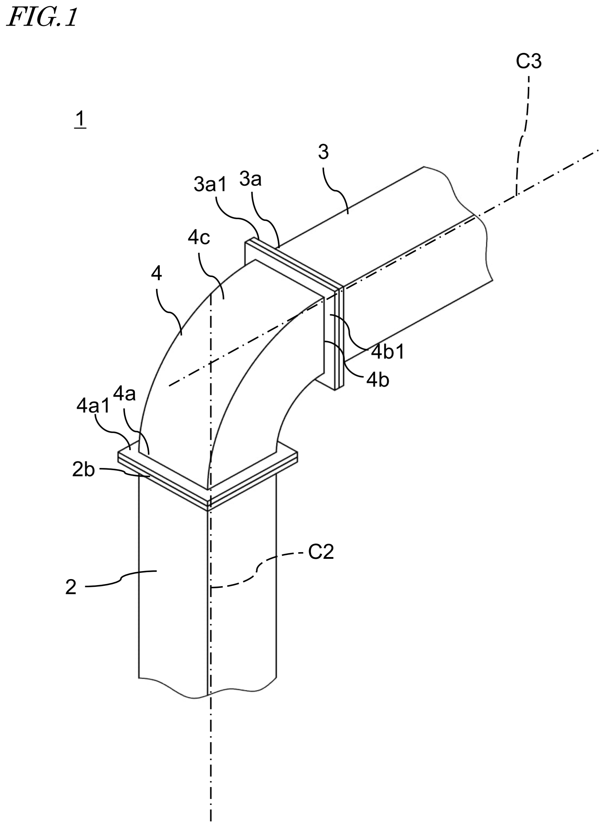

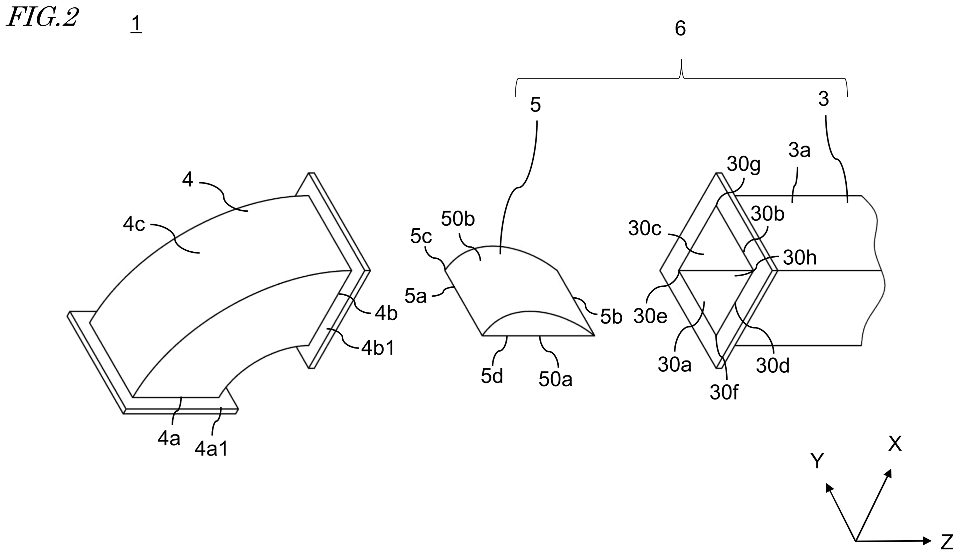

Fig. 1 is a perspective view of a piping member of a piping system 1 according to this embodiment. Fig. 2 is an exploded perspective view of a piping member of a piping system 1 according to this Embodiment. The piping system 1 is a piping system for transporting fluid that the Reynolds number is 4000 or higher. Examples of the fluid include liquid (drinking water, heat source water, wastewater, oil, etc.), gas (air, steam, etc.), and gas-liquid two-phase flow (mixtures of liquid and gas). In the present embodiment, the piping system 1 constitutes a part of a flow channel of the gas for ventilation. The piping system 1 is applicable to, for example, engine intake and exhaust systems, flue, chimney, or the like.

The piping system 1 includes straight piping members 2, 3, a bend member 4, and a protruding member 5.

The straight piping member 2 defines a flow channel. The straight piping member 2 is used for transporting fluid. The straight piping member 2 has a straight pipe shape. A cross section taken perpendicular to a central axis C2 of the straight piping member 2 is rectangular (especially, square in the present embodiment). The straight piping member 2 has an upstream end and a downstream end 2b. The downstream end 2b is an end connected to the bend member 4. The upstream end is an end connected to the other piping member, which differs from the bend member 4. For example, the upstream end of the straight piping member 2 is connected to an air intake. A ventilation equipment may be installed at the air intake. The connecting structure between the straight piping member 2 and the bend member 4 will be explained later.

The straight piping member 3 defines a flow channel. The straight piping member 3 is used for transporting fluid. The straight piping member 3 has a straight pipe shape. A cross section taken perpendicular to a central axis C3 of the straight piping member 3 is rectangular (especially, square in the present embodiment). The straight piping member 3 has an upstream end 3a and a downstream end. The upstream end 3a is an end connected to the bend member 4. The downstream end of the straight piping member 3 is an end connected to the other piping member, which differs from the bend member 4. For example, the downstream end of the straight piping member 3 is connected to an air outtake. The connecting structure between the straight piping member 3 and the bend member 4 will be explained later.

As one example, the material and the dimensions, such as the outer shape and thickness, of the straight piping member 2, 3 may be set in accordance with the rectangular duct of JIS A 4009 "Components of air duct used for air conditioning and ventilation system".

The bend member 4 is a bend to change the direction of the flow channel. The bend member 4 are a pipe that interconnect piping channels of differing directions. The bend member 4, for example, can interconnect flow channels of differing directions, such as between the straight piping member 2 and the straight piping member 3. As shown in Fig. 1, the bend member 4 interconnect between the straight piping member 2 and the straight piping member 3 such that the center axis C2 of the straight piping member 2 intersects with the center axis C3 of the straight piping member 3. The bend member 4 in Fig. 1 interconnects the downstream end 2b of the straight piping member 2 to the upstream end 3a of the straight piping member 3. The bend member 4 has an upstream end 4a, a downstream end 4b and a bend portion 4c between the upstream end 4a and the downstream end 4b. Openings each corresponding the upstream end 4a and the downstream end 4b are rectangular (especially, square in the present embodiment). In Fig. 1, the upstream end 4a is connected to the straight piping member 2 and the downstream end 4b is connected to the straight piping member 3. The angle between the central axes C2 of the straight piping member 2 and the central axes C3 of the straight piping member 3 is, for example, 91.17°, as specified in JIS K 6739 "Unplasticized poly(vinyl chloride) (PVC-U) pipe fittings for drain." As one example, the material of the bend member 4 may be metal and the like.

The connecting structure between the pipes, such as the straight piping members 2, 3 and the bend member 4, in the piping system is described below. It is noted that the dimensions of the openings of the ends of the bend member 4 may be appropriately set according to the dimensions of the connected piping member.

Each of the ends of the pipes, such as the straight piping member 2, 3 and the bend member 4, may have flanges extending from the inner side surfaces toward the outer side surfaces viewed along a direction of a center axis. In Fig. 2, the straight piping member 3 has a flange 3al in the upstream 3a and the bend member 4 has a flange 4a1 in the upstream end 4a and a flange 40b in the downstream end 4b1 respectively. The connection between the pipes can be made by fixing the flanges together. For example, the connection may be fixed by bolts through holes opened in the flanges. As one example, the connecting structure between the flanges may be set in accordance with "the structure of joint" of JIS A 4009 "Components of air duct used for air conditioning and ventilation system".

When the direction of the flow channel changes within the bend member 4, pressure loss due to flow separation can contribute to a decline in flow rate of the fluid. In the present embodiment, to reduce the decline in flow rate due to the pressure loss caused by the bend member 4, a protruding member 5 is disposed. The protruding member 5 is disposed inside the straight piping member 3 and used to partially reduce the flow channel cross-sectional area of the straight piping member 3.

In the piping system 1, the straight piping member 3 is disposed on a downstream side of the bend member 4 to change the direction of the flow channel. The protruding member 5 is disposed inside at least part of the straight piping member 3 as a straight pipe. In the present embodiment, at least part of the straight piping member 3 is the entire straight piping member 3.

The protruding member 5, together with the straight piping member 3 where the protruding member 5 is disposed, constitutes piping member 6.

In the present embodiment, the straight piping member 3 is rectangular-shaped as described above. In particular, an inner circumferential surface 30 of the straight piping member 3 includes a first inner side surface 30a, a second inner side surface 30b, a third inner side surface 30c, and a fourth inner side surface 30d. The first inner side surface 30a, the second inner side surface 30b, the third inner side surface 30c, and the fourth inner side surface 30d are all planar-shaped.

The first inner side surface 30a and the second inner side surface 30b face each other in second direction X orthogonal to first direction Z along the center axis C3 of the straight piping member 3.

The third inner side surface 30c and the fourth inner side surface 30d face each other in third direction Y orthogonal to the first direction Z and the second direction X respectively.

In the straight piping member 3, both ends of the first inner side surface 30a in the third direction Y are connected to the third inner side surface 30c and the fourth inner side surface 30d, respectively, via a first corner 30e and a second corner 30f. Both ends of the second inner side surface 30b in the third direction Y are connected to the third inner side surface 30c and the fourth inner side surface 30d, respectively, via a third corner 30g and a fourth corner 30h. The first corner 30e, the second corner 30f, the third corner 30g, and a fourth corner 30h may be rounded corners or corners with right angle.

In the present embodiment, the wall thickness of the straight piping member 3 is approximately uniform, and the inner circumferential shape and the outer circumferential shape of the straight piping member 3 are similar figures.

The straight piping member 3 described above is connected to the downstream end 4b of the bend member 4, so that the first inner side surface 30a corresponds to inner circumferential side of the bend member 4 and the second inner side surface 30b corresponds to outer circumferential side of the bend member 4 respectively.

As shown in Fig. 2, the protruding member 5 has a size, i.e., length, width, and height (thickness), that allows it to be disposed inside the straight piping member 3.

In the present embodiment, the protruding member 5 and the straight piping member 3 are separate members and may be formed of different materials. The material of the protruding member 5 is, for example, resin, such as poly(vinyl chloride), unplasticized poly, PMMA, ABS, and ASA, or metal, such as steel, aluminum, stainless steel (rust-resistant meal). As one example, the material of the protruding member 5 is ASA and the material of the straight piping member 3 is metal.

The protruding member 5 has a first surface 50a and a second surface 50b. The first surface 50a faces the first inner side surface 30a of the straight piping member 3. The second surface 50b is disposed on the opposite side of the first surface 50a and acts upon (contacts) the fluid flowing the flow channel. The first surface 50a and the second surface 50b are both sides of the protruding member 5 in the second direction X. The second direction X corresponds to the height of the protruding member 5. The protruding member 5 can be attached to a predefined position of the first inner side surface 30a of the straight piping member 3 using adhesive or the like.

The protruding member 5 has a first end 5a and a second end 5b in the first direction Z. The first direction Z corresponds to the length of the protruding member 5. The first end 5a and the second end 5b are both sides in the length direction of the protruding member 5. The first direction Z is also the direction along the flow channel of the straight piping member 3. The first end 5a directs toward upstream, and the second end 5b directs toward downstream. In the protruding member 5, fluid flows from the first end 5a to the second end 5b.

The protruding member 5 has a third end 5c and a fourth end 5d in the third direction Y. The third direction Y corresponds to the width of the protruding member 5. The third end 5c and the fourth end 5d are both sides in the width direction of the protruding member 5. An external shape of the protruding member 5 is mirror-symmetrical with respect to a plane orthogonal to the third direction Y.

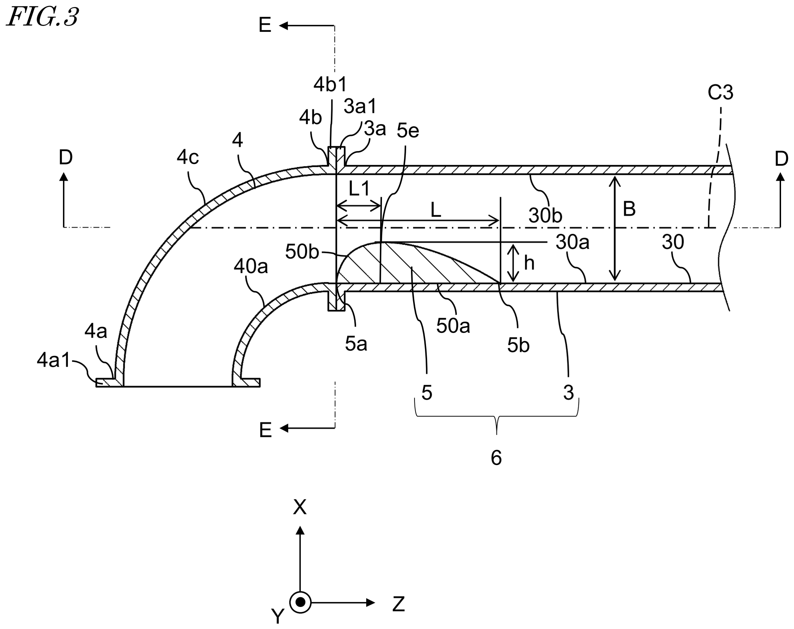

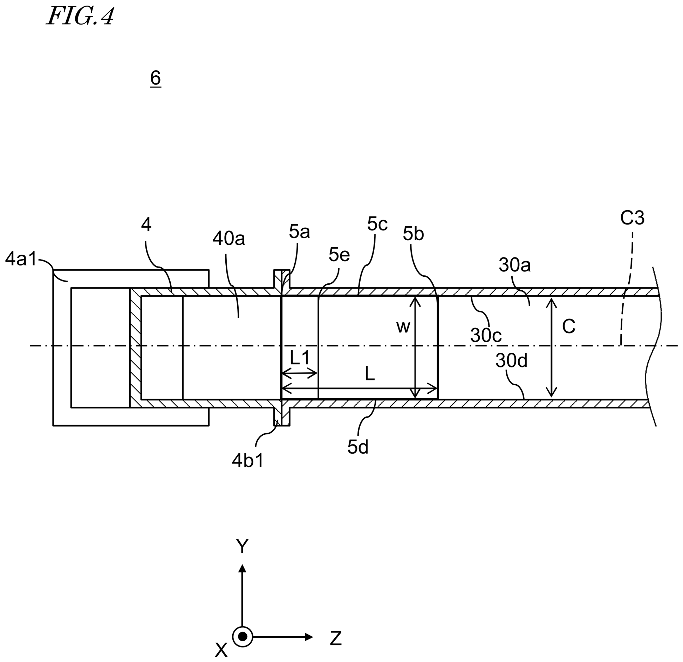

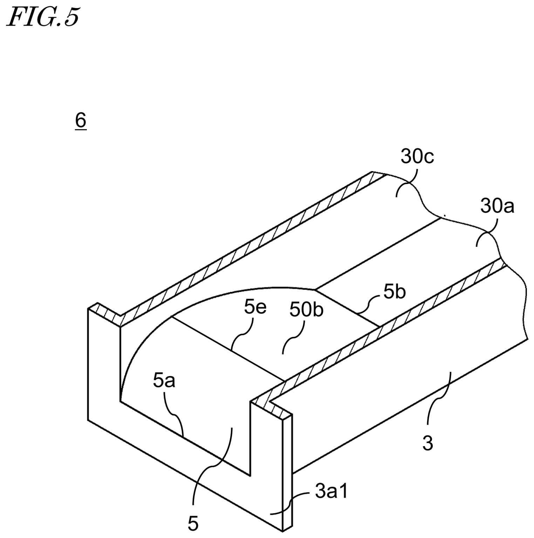

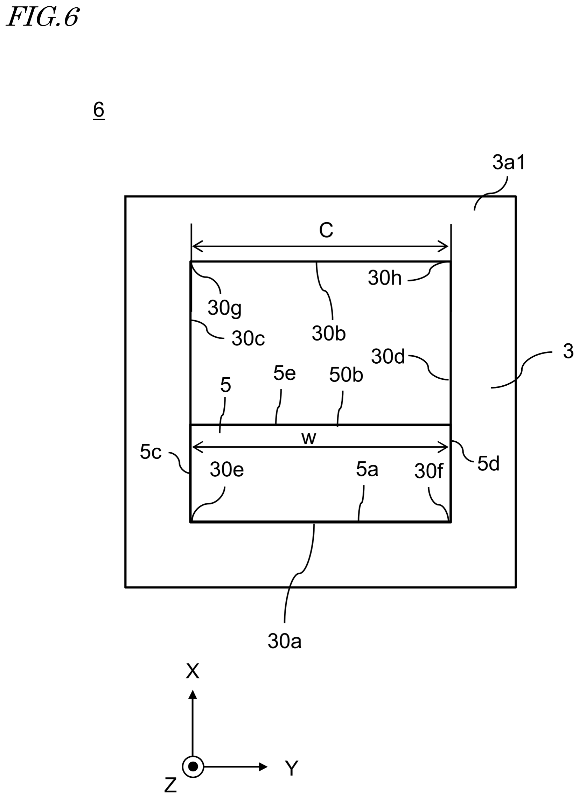

Fig. 3 is a cross-sectional view of the piping member 6. Fig. 4 is a cross-sectional view along line D-D in Fig. 3. Fig. 5 is a cross-sectional view with a part of the piping member 6 cut away. Fig. 6 is a cross-sectional view along line E-E in Fig. 3.

As a result of the protruding member 5 being disposed, the flow channel cross-sectional area of the piping member 6 is not constant, and there exists a reduced area where the flow channel cross-sectional area of the piping member 6 is smaller than the cross-sectional area of the straight piping member 3. The protruding member 5 is positioned closer to the upstream end 3a of the straight piping member 3 than the downstream end of the straight piping member 3. In the present embodiment, the protruding member 5 is placed at the upstream end 3a of the straight piping member 3. That is, the protruding member 5 reduces the flow channel at the upstream end 3a of the straight piping member 3, which connects to the bend member 4.

Next, the effect of the protruding member 5 in the piping member 6 will be explained. The protruding member 5 is disposed inside the straight piping member 3 disposed on the downstream side of the bend member 4. The bend member 4 directs fluid that flows in from the straight piping member 2, to the straight piping member 3. When the direction of the fluid flow changes significantly within the bend member 4, pressure loss due to flow separation can contribute to a decline in flow rate.

The separation occurs when fluid separates from a pipe wall (the inner circumferential surface 30 of the straight piping member 3) at the downstream side of the inner peripheral wall surface 40a of the bend member 4. That is, fluid flowing in from upstream initially travels along the pipe wall (the inner circumferential surface of the straight piping member 2), but may separate from the pipe wall (the inner circumferential surface 30 of the straight piping member 3) of the bend member 4 after the inner peripheral wall surface 40a of the bend member 4. Such separation is especially pronounced at higher flow velocity, and faster flow tends to enlarge the area where pressure loss occurs.

In the present embodiment, the piping member 6 includes the protruding member 5. Due to the presence of the protruding member 5, (1) It can be expected that fluid will flow along the pipe wall more easily than in the case where the protruding member 5 is not provided, and (2) It can be expected to reduce the locations themselves where flow velocity may decrease. Thus, the protruding member 5 reduces decrease in flow velocity due to separation at the downstream side of the bend member 4 and can improve flow rate. The piping member 6, simply by including the protruding member 5, does not require an increase in the radius of curvature of the inner peripheral surface on the inner peripheral side of the bend member 4 as in the technology described in Patent Document 1, thereby enabling downsizing. Accordingly, the protruding member 5 enables reducing the loss of fluids while downsizing.

In the piping system 1, particularly, piping components, such as the straight piping member 2, the straight piping member 3, and bend member 4, is rectangular-shaped, not round-shaped. That is, the piping system 1 is rectangular-shaped piping. In such rectangular-shaped piping, a flow loss at the corners of the bend member 4 and the like are significant, which causes significant loss in fluid transport. Traditionally, flow straightening plates have been used as a method for reducing such loss, but when the flow is strong, the flow straightening plates require high strength, which necessarily demands supporting structures and strength design for the flow straightening plates. Furthermore, various considerations were necessary, including issues of aging degradation and the increased susceptibility to clogging by foreign objects due to the narrowing of the flow path for this purpose.

The piping system 1 of the present embodiment, however, since the protruding member 5 that causes the Coanda effect in the downstream side of the bend member 4 is disposed, can enhance the flow along the protruding member 5 around the protruding member 5 and can reduce loss at the bend member 4, thereby significantly reducing overall losses.

The shape of the protruding member 5 is described below in more detail.

As can be understood from Fig. 3, as viewed along the first direction Z, the shape (cross-sectional shape) of the protruding member 5 changes along the direction of the central axis C3 of the straight piping member 3. In more detail, as showed in Fig. 3, the height of the protruding member 5 changes along the direction of the central axis C3 of the straight piping member 3. In the protruding member 5 of the present embodiment, the second surface 50b is the curve-shaped working surface extending from the first end 5a to the second end 5b so that it includes a top 5e minimizing the cross-sectional area of the flow channel of the straight piping member 3 between the first end 5a and the second end 5b.

The top 5e is positioned between the first end 5a and the second end 5b, and is the part of the protruding member 5 with the greatest height. The top 5e minimizes the cross-sectional area of the flow channel of the straight piping member 3. In the present embodiment, as shown in Fig. 4 and Fig. 5, the height of the top 5e is uniform and does not change in the third direction Y.

The height of the protruding member 5 increases monotonically from the first end 5a to the top 5e. The height of the protruding member 5 decreases monotonically from the top 5e to the second end 5b.

Referring to Fig. 3, a distance between the first inner side surface 30a and the second inner side surface 30b of the straight piping member 3 (the internal dimension of the straight piping member 3 in the second direction X) is denoted by "B". Referring to Fig. 4, a distance between the third inner side surface 30c and the fourth inner side surface 30d of the straight piping member 3 (the internal dimension of the straight piping member 3 in the third direction Y) is denoted by "C". Also, the larger of "B" and "C" is denoted by "A". That is, a maximum internal dimension of the straight piping member 3 is denoted by "A". In the present embodiment, A = B = C, since B = C.

In the protruding member 5, a distance between the first end 5a and the second end 5b in the first direction Z is denoted by "L", a distance between the first end 5a and the top 5e in the first direction Z is denoted by "L1", and a height between the third end and the top 5e in the third direction Y is denoted by "h". L may be set based on A. Preferably, L satisfies 0.3A ≤ L ≤ 2A, and it is more preferable that L is set based on the relation between A and B (aspect ratio). This can efficiently maximize the effect of the reduction of the pressure loss. L1 may be set based on L. Preferably, L1 satisfies 0.05L ≤ L1 ≤ 0.4L, and it is more preferable that L1 satisfies 0.25L ≤ L1 ≤ 0.35L. h may be set based on B. Preferably, h satisfies 0.1B ≤ h ≤ 0.5B, and it is more preferable that h satisfies 0.25B ≤ h ≤ 0.35B. Therefore, the fluid becomes easy to flow along the protruding member 5, thereby enabling improvement of flow rate.

Referring to Fig. 6, in the present embodiment, both ends of the first inner side surface 30a in the third direction Y are connected to the third inner side surface 30c and the fourth inner side surface 30d, respectively, via the first corner 30e and the second corner 30f. A distance between the third end 5c of the third inner side surface 30c side and the fourth end 5d of the fourth inner side surface 30d side in the protruding member 5 is denoted by "w". w may be set based on C. Preferably, C satisfies 0.8C ≤ w ≤ C, and it is more preferable as w approaches C. In the present embodiment, w = C. Therefore, the fluid becomes easy to flow along the protruding member 5, thereby enabling improvement of flow rate.

The piping member 6 can use as an individual component forming a part of the piping system 1. In this case, in the relation between a length Lp in the first direction Z of the straight piping member 3 and the length L in the first direction Z of the protruding member 5, it is preferable that Lp satisfies L ≤ Lp ≤ 3L. Therefore, the piping member 6 is not too long, making it easier to handle, and since the protruding member 5 can be prevented from protruding from the straight piping member 3, thereby reducing the risk of damage to the protruding member 5, for example, during transport of the piping member 6.

### [1.2. ADVANTAGESOUS EFFECTS]

The aforementioned piping system 1 is a piping system transporting fluid, and includes: a bend member 4 for changing a direction of a flow channel, the bend member 4 being rectangular-shaped; a straight piping member 3 having a rectangular shape and connected to a downstream end 4b of the bend member 4, and including a first inner side surface 30a and a second inner side surface 30b each having a planar shape and corresponding respectively to an inner circumferential side and an outer circumferential side of the bend member 4; and a protrude member 5 including a first end 5a directed toward the bend member 4 and a second end 5b directed away from the bend member 4, and disposed on the first inner side surface 30a of the straight piping member 3 so that the first end 5a is positioned at the downstream end 4b of the bend member 4, the protrude member 5 including a top 5e positioned between the first end 5a and the second end 5b to minimize the flow channel cross-sectional area of the straight piping member 3, wherein: when a direction along a center axis C3 of the straight piping member 3 is a first direction Z, a distance between the first end 5a and the second end 5b in the first direction Z is denoted by "L" and a distance between the first end 5a and the top 5e in the first direction Z is denoted by "L1", 0.05L ≤ L1 ≤ 0.4L; when a maximum internal dimension of the straight piping member 3 is denoted by "A", 0.3A ≤ L ≤ 2A; when an internal dimension of the straight piping member 3 in a second direction X in which the first and the second inner side surface 30a, 30b face each other is denoted by "B" and an internal dimension of the straight piping member 3 in a third direction Y orthogonal to the first direction Z and the second direction X respectively is denoted by "C", "A" is the larger of "B" and "C"; when a height at the top 5e in the protrude member 5 is denoted by "h", 0.1B ≤ h ≤ 0.5B; and when a width of the protrude member 5 is denoted by "w", 0.8C ≤ w ≤ C. This configuration can reduce the loss of fluids.

In the piping system 1, the protruding member 5 is made of resin. This configuration can reduce the loss of fluids.

In the piping system 1, the straight piping member 3 is made of metal. This configuration can reduce the loss of fluids.

The aforementioned piping member 3 is a piping member forming a part of a piping system 1 transporting fluid, including: a straight piping member 3 having a rectangular shape and connected to a downstream end 4b of a bend member 4 having a rectangular shape for changing a direction of a flow channel, and including a first inner side surface 30a and a second inner side surface 30b each having a planar shape and corresponding respectively to an inner circumferential side and an outer circumferential side of the bend member 4; a protrude member 5 including a first end 5a directed toward the bend member 4 and a second end 5b directed away from the bend member 4, and disposed on the first inner side surface 30a of the straight piping member 3 so that the first end 5a is positioned at the downstream end 4b of the bend member 4, the protrude member 5 including a top 5e positioned between the first end 5a and the second end 5b to minimize the flow channel cross-sectional area of the straight piping member 3, wherein: when a direction along a center axis C3 of the straight piping member 3 is a first direction Z, a distance between the first end 5a and the second end 5b in the first direction Z is denoted by "L" and a distance between the first end 5a and the top 5e in the first direction Z is denoted by "L1", 0.05L ≤ L1 ≤ 0.4L; when a maximum internal dimension of the straight piping member 3 is denoted by "A", 0.3A ≤ L ≤ 2A; when an internal dimension of the straight piping member 3 in a second direction X in which the first and the second inner side surface 30a, 30b face each other is denoted by "B" and an internal dimension of the straight piping member 3 in a third direction Y orthogonal to the first direction Z and the second direction X respectively is denoted by "C", "A" is the larger of "B" and "C"; when a height at the top 5e in the protrude member 5 is denoted by "h", 0.1B ≤ h ≤ 0.5B; when a width of the protrude member 5 is denoted by "w", 0.8C ≤ w ≤ C; and when a length of the straight piping member 3 is denoted by "Lp", L ≤ Lp ≤ 3L. This configuration can reduce the loss of fluids.

In the piping member 6, the protruding member 5 is made of resin. This configuration can reduce the loss of fluids.

In the piping member 6, the straight piping member 3 is made of metal. This configuration can reduce the loss of fluids.

The aforementioned protruding member 5 is a protrude member disposed on an inner circumferential surface 30 of a straight piping member 3 connected to a downstream end 4b of a bend member 4 for changing a direction of a flow channel, the straight piping member 3 being rectangular-shaped, the bend member 4 being rectangular-shaped, wherein: the straight piping member 3 includes a first inner side surface 30a and a second inner side surface 30b each having a planar shape and corresponding respectively to an inner circumferential side and an outer circumferential side of the bend member 4; the protrude member 5 includes a first end 5a directed toward the bend member 4 and a second end 5b directed away from the bend member 4, is disposed on the first inner side surface 30a of the straight piping member 3 so that the first end 5a is positioned at the downstream end 4b of the bend member 4, and includes a top 5e positioned between the first end 5a and the second end 5b to minimize the flow channel cross-sectional area of the straight piping member 3; when a direction along a center axis C3 of the straight piping member 3 is a first direction Z, a distance between the first end 5a and the second end 5b in the first direction Z is denoted by "L" and a distance between the first end 5a and the top 5e in the first direction Z is denoted by "L1", 0.05L ≤ L1 ≤ 0.4L; when a maximum internal dimension of the straight piping member 3 is denoted by "A", 0.3A ≤ L ≤ 2A; when an internal dimension of the straight piping member 3 in a second direction X in which the first and the second inner side surface 30a, 30b face each other is denoted by "B" and an internal dimension of the straight piping member 3 in a third direction Y orthogonal to the first direction Z and the second direction X respectively is denoted by "C", "A" is the larger of "B" and "C"; when a height at the top 5e in the protrude member 5 is denoted by "h", 0.1B ≤ h ≤ 0.5B; and when a width of the protrude member 5 is denoted by "w", 0.8C ≤ w ≤ C. This configuration can reduce the loss of fluids.

The protruding member 5 is made of resin. This configuration can reduce the loss of fluids.

### [2. VARIATIONS]

Embodiments of the present disclosure are not limited to the embodiments described above. The above embodiments may be variously modified in accordance with design and other factors, provided that the objects of the present disclosure can be achieved. Hereinafter, variations of the above embodiments will be enumerated. The variations described below may be applied in appropriate combinations.

### [2.1. VARIATIONS 1]

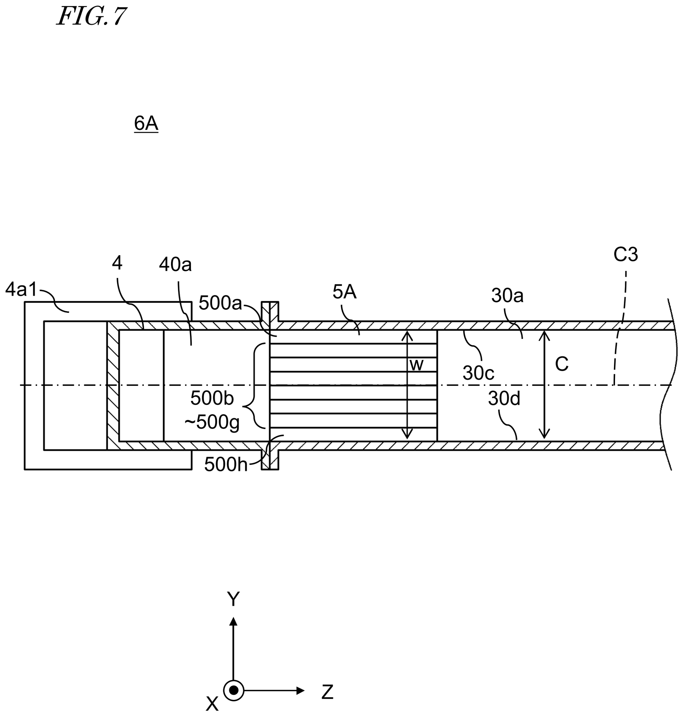

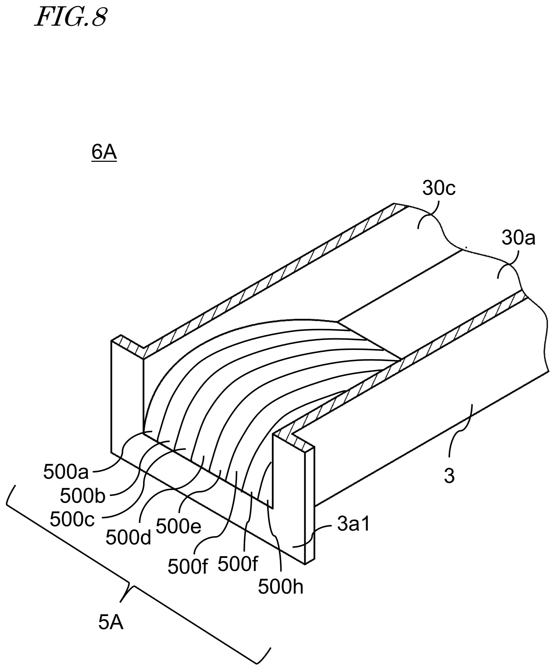

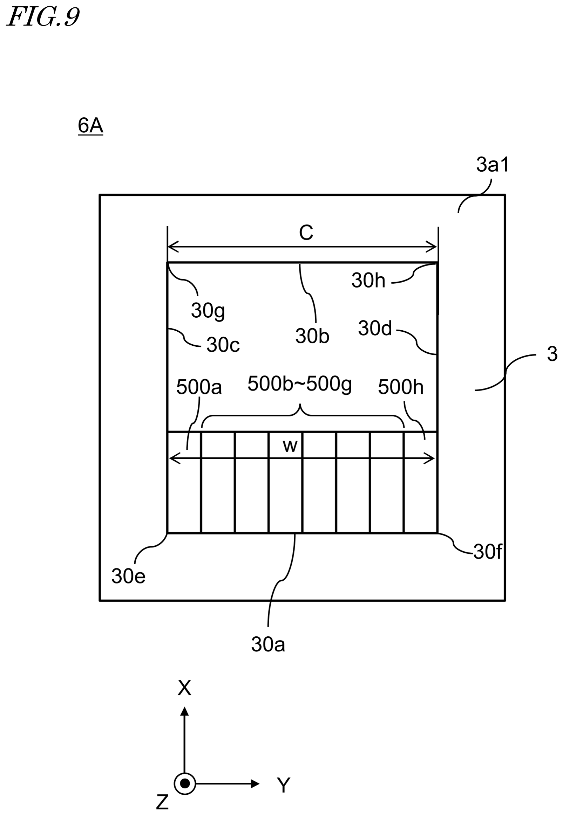

Fig. 7 is a cross-sectional view of a piping member according to Variations 1. Fig. 7 corresponds to a cross-sectional view along line D-D in Fig. 3. Fig. 8 is a cross-sectional view with a part of the piping member 6A cut away according to Variation 1. Fig. 9 is another cross-sectional view of a piping member 6A according to Variations 1. Fig. 9 corresponds a cross-sectional view along line E-E in Fig. 3.

The piping member 6A is composed of a protruding member 5A and the straight piping member 3 to which the protruding member 5A is disposed. Variations 1 is different from the Embodiment in terms of including the protruding member 5A instead of the protruding member 5.

The protruding member 5A is composed of a plurality of protruding components 500. In examples of Fig. 7-9, the protruding member 5A is composed of the eight protruding components 500a-500h. The eight protruding components 500a-500h are arranged in the third direction Y. In Fig. 7, the protruding components 500a-500h are arranged in this order from the third inner side surface 30c to fourth inner side surface 30d of the straight piping member 3. Each of the protruding components 500a-500h have same shape as the protruding member 5 in the embodiment viewed along the third direction Y, but a width (a dimension in the third direction Y) differs from the protruding member 5 in the embodiment. That is, the shape of the protruding components 500a-500h is different from the protruding member 5 in the above embodiment in terms of having short width. In other words, the plurality of the protruding components 500 are the shape formed by dividing the protruding member 5A into multiple components in the third direction Y. In each of the protruding components 500a-500h, both surfaces in the third direction are flat surfaces, and by arranging them to contact each other, gaps of the surfaces facing each other can be filled.

A width w of the protruding member 5A can be adjusted by changing the number of the plurality of the protruding components 500 or the width of each of the plurality of the protruding components 500. Also, the surface facing the third inner side surface 30c of the straight piping member 3 in the protruding component 500a may be separate without contact to the third inner side surface 30c, and the surface facing the fourth inner side surface 30d of the straight piping member 3 in the protruding component 500h may be separate without contact to the fourth inner side surface 30d. Thereby, when a dimension of the straight piping member 3 in the third direction Y is denoted by "C", during implementations or at the time of the adjustment after the implementations, the width w of the protruding member 5A can be adjusted to any width within the range of C or less, and it is easy to adjust the width w to a width which enables to reduce the loss of fluids. As a result, the width w of the protruding member 5A is specified by a sum of widths of the plurality of the protruding components 500. As one example, the width w of the protruding components 500 may be, but not limited to, 20mm.

The protruding member 5A is composed of a plurality of protruding components 500 arranged in the third direction Y, the plurality of the protruding components 500 facing each other, wherein surfaces facing each other in the third direction Y of the plurality of the protruding components 500 are flat. This configuration can reduce the loss of fluids.

The width w of the protruding member 5A is specified by a sum of widths of the plurality of the protruding components 500. This configuration can reduce the loss of fluids.

### [2.2. VARIATIONS 2]

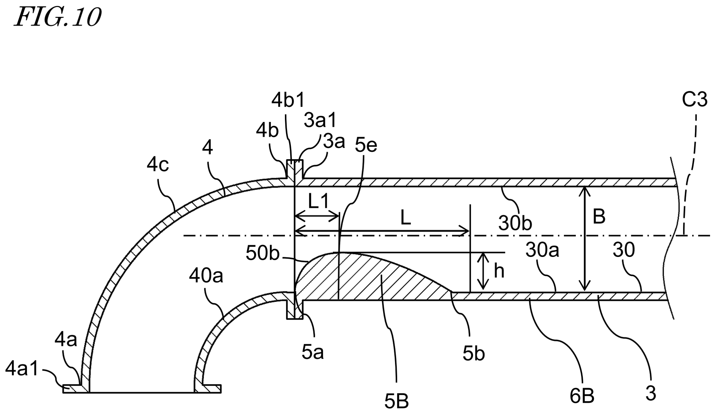

Fig. 10 is a cross-sectional view of a piping member 6B of a piping system according to Variations 2. The piping system in Variation 2, compared to the above embodiment, includes a protruding member 5B instead of the protruding member 5, and the protruding member 5B is different from the protruding member 5 and formed integrally with the straight piping member 3. That is, the protruding member 5B and the straight piping member 3 are formed as one component. In other words, a part of the first inner side surface 30a of the straight piping member 3 specifies the protruding member 5B. In this case, the protruding member 5B does not fall off from the straight piping member 3. Thereby, it can provide stable fluid loss reduction. Also, the piping member 6B can be handle as one member, thereby enabling implemented easily. It is noted that, in Variations 2, a part corresponding to the protruding member 5B in an outer side surface of the straight piping member 3 may concave along the shape of the second surface 50b of the protruding member 5B.

### [2.3. OTHER VARIATIONS]

In one variation, the external shape of the protruding member 5 is not necessarily mirror-symmetrical with respect to a plane orthogonal to the third direction Y. In other words, in the protruding member 5, the working surface (the second surface 50b) may be asymmetry viewed along the first direction Z. This enables to handle when flow distribution inside the piping system 1 is non-uniform.

In one variation, the width w of the protruding member 5 may change along the first direction Z. The width of the protruding member 5 means the width in the part of the protruding member 5 closest to the inner circumferential surface 30 of the straight piping member 3. In this embodiment, the width w of the protruding member 5 corresponds a distance between the third end 5c and the fourth end 5d of the protruding member 5. For example, the protruding member 5 may include the tapered part that narrows toward second end 5b in the first direction Z. This enables improvement of flow rate.

In one variation, the whole of the protruding member 5 do not have to be contained within the straight piping member 3. In particular, the second end 5b of the protruding member 5 may protrude to the outside from the straight piping member 3. On the other hand, the whole of the protruding member 5 may be contained in the straight pipe, while not protrude into the bend member 4.

In one variation, the shape and size of part or all of the piping system 1 may differ from those described in the above embodiment. For example, unlike the above embodiment, in the piping system 1, the shapes of the bend member 4, the straight piping member 2, and the straight piping member 3, may be polygonal rather than rectangular.

In one variation, the protruding member 5 may be a hollow construction with the same surface shape. In this case, specifically, the thickness of the second surface 50b composed of a plate member may be 0.1mm or more.

The protruding member 5 includes a plate member composing a surface on the second inner surface side 30b; and a thickness of the plate member is 0.1mm or more. This configuration can reduce the loss of fluids.

### [3. ASPECTS]

As apparent from the above embodiments and variations, the present disclosure includes the following aspects.

Aspect 1 is a piping system transporting fluid, comprising: a bend member for changing a direction of a flow channel, the bend member being rectangular-shaped; a straight piping member having a rectangular shape and connected to a downstream end of the bend member, and including a first inner side surface and a second inner side surface each having a planar shape and corresponding respectively to an inner circumferential side and an outer circumferential side of the bend member; and a protruding member including a first end directed toward the bend member and a second end directed away from the bend member, and disposed on the first inner side surface of the straight piping member so that the first end is positioned at the downstream end of the bend member, the protruding member comprising a top positioned between the first end and the second end to minimize a flow channel cross-sectional area of the straight piping member, wherein: when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L; when a maximum internal dimension of the straight piping member is denoted by "A", 0.3A ≤ L ≤ 2A; when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C"; when a height at the top in the protruding member is denoted by "h", 0.1B ≤ h ≤ 0.5B; and when a width of the protruding member is denoted by "w", 0.8C ≤ w ≤ C.

Aspect 2 is the piping system according to aspect 1. The protruding member is made of resin.

Aspect 3 is the piping system according to aspects 1 or 2. The straight piping member is made of metal.

Aspect 4 is the piping system according to any one of aspects 1-3. The protruding member includes a plate member composing a surface on the second inner surface side; and a thickness of the plate member is 0.1mm or more.

Aspect 5 is a piping member forming a part of a piping system transporting fluid, comprising: a straight piping member having a rectangular shape and connected to a downstream end of a bend member having a rectangular shape for changing a direction of a flow channel, and including a first inner side surface and a second inner side surface each having a planar shape and corresponding respectively to an inner circumferential side and an outer circumferential side of the bend member; a protruding member including a first end directed toward the bend member and a second end directed away from the bend member, and disposed on the first inner side surface of the straight piping member so that the first end is positioned at the downstream end of the bend member, the protruding member comprising a top positioned between the first end and the second end to minimize a flow channel cross-sectional area of the straight piping member, wherein: when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L; when a maximum internal dimension of the straight piping member is denoted by "A", 0.3A ≤ L ≤ 2A; when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C"; when a height at the top in the protruding member is denoted by "h", 0.1B ≤ h ≤ 0.5B; when a width of the protruding member is denoted by "w", 0.8C ≤ w ≤ C; and when a length of the straight piping member is denoted by "Lp", L ≤ Lp ≤ 3L.

Aspect 6 is the piping member according to aspect 5. The protruding member is made of resin.

Aspect 7 is the piping member according to aspects 5 or 6. The straight piping member is made of metal.

Aspect 8 is the piping member according to any one of aspects 5-7. The protruding member includes a plate member composing a surface of the second inner surface side; and a thickness of the plate member is 0.1mm or more.

Aspect 9 is a protruding member disposed on an inner circumferential surface of a straight piping member connected to a downstream end of a bend member for changing a direction of a flow channel, the straight piping member being rectangular-shaped, the bend member being rectangular-shaped, wherein: the straight piping member includes a first inner side surface and a second inner side surface each having a planar shape and corresponding respectively to an inner circumferential side and an outer circumferential side of the bend member; the protruding member includes a first end directed toward the bend member and a second end directed away from the bend member, is disposed on the first inner side surface of the straight piping member so that the first end is positioned at the downstream end of the bend member, and comprises a top positioned between the first end and the second end to minimize a flow channel cross-sectional area of the straight piping member; when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L; when a maximum internal dimension of the straight piping member is denoted by "A", 0.3A ≤ L ≤ 2A; when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C"; when a height at the top in the protruding member is denoted by "h", 0.1B ≤ h ≤ 0.5B; and when a width of the protruding member is denoted by "w", 0.8C ≤ w ≤ C.

Aspect 10 is the protruding member according to aspect 9, composed of a plurality of protruding components arranged in the third direction, the plurality of the protruding components facing each other, wherein surfaces facing each other in the third direction of the plurality of the protruding components are flat.

Aspect 11 is the protruding member according to aspect 10. The width of the protruding member is specified by a sum of widths of the plurality of the protruding components.

Aspect 12 is the protruding member according to any one of aspects 9-11, being made of resin.

Aspect 13 is the protruding member according to any one of aspects 9-12, including a plate member composing a surface on the second inner surface side, wherein a thickness of the plate member is 0.1mm or more.

### INDUSTRIAL APPLICABILITY

The present disclosure can be applied to piping systems, piping members, and protruding members.

### REFERENCE SIGNS LIST

- 1: Piping System
- 2, 3: Straight Piping Member
- C3: Central Axis
- 30: Inner Circumferential Surface
- 30a: First Inner Side Surface
- 30b: Second Inner Side Surface
- 4: Bend Member
- 3a, 4a: Upstream End
- 4b: Downstream End
- 5, 5A: Protruding Member
- 5a: First End
- 5b: Second End
- 5e: Top
- 500: Protruding Component
- 6, 6A: Piping Member
- X: Second Direction
- Y: Third Direction
- Z: First Direction

## Claims

1. A piping system transporting fluid, comprising:
a bend member for changing a direction of a flow channel, the bend member being rectangular-shaped;
a straight piping member having a rectangular shape and connected to a downstream end of the bend member, and including a first inner side surface and a second inner side surface each having a planar shape and corresponding respectively to an inner circumferential side and an outer circumferential side of the bend member; and
a protruding member including a first end directed toward the bend member and a second end directed away from the bend member, and disposed on the first inner side surface of the straight piping member so that the first end is positioned at the downstream end of the bend member,
the protruding member comprising a top positioned between the first end and the second end to minimize a flow channel cross-sectional area of the straight piping member, wherein:
when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L;
when a maximum internal dimension of the straight piping member is denoted by "A", 0.3A ≤ L ≤ 2A;
when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C";
when a height at the top in the protruding member is denoted by "h", 0.1B ≤ h ≤ 0.5B; and
when a width of the protruding member is denoted by "w", 0.8C ≤ w ≤ C.

2. The piping system according to claim 1, wherein
the protruding member is made of resin.

3. The piping system according to claims 1 or 2, wherein
the straight piping member is made of metal.

4. The piping system according to claims 1 or 2, wherein:
the protruding member includes a plate member composing a surface on the second inner surface side; and a thickness of the plate member is 0.1mm or more.

5. A piping member forming a part of a piping system transporting fluid, comprising:
a straight piping member having a rectangular shape and connected to a downstream end of a bend member having a rectangular shape for changing a direction of a flow channel, and including a first inner side surface and a second inner side surface each having a planar shape and corresponding respectively to an inner circumferential side and an outer circumferential side of the bend member;
a protruding member including a first end directed toward the bend member and a second end directed away from the bend member, and disposed on the first inner side surface of the straight piping member so that the first end is positioned at the downstream end of the bend member,
the protruding member comprising a top positioned between the first end and the second end to minimize a flow channel cross-sectional area of the straight piping member, wherein:
when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L;
when a maximum internal dimension of the straight piping member is denoted by "A", 0.3A ≤ L ≤ 2A;
when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C";
when a height at the top in the protruding member is denoted by "h", 0.1B ≤ h ≤ 0.5B;
when a width of the protruding member is denoted by "w", 0.8C ≤ w ≤ C; and
when a length of the straight piping member is denoted by "Lp", L ≤ Lp ≤ 3L.

6. The piping member according to claim 5, wherein
the protruding member is made of resin.

7. The piping member according to claims 5 or 6, wherein
the straight piping member is made of metal.

8. The piping member according to claims 5 or 6, wherein:
the protruding member includes a plate member composing a surface on the second inner surface side; and a thickness of the plate member is 0.1mm or more.

9. A protruding member disposed on an inner circumferential surface of a straight piping member connected to a downstream end of a bend member for changing a direction of a flow channel, the straight piping member being rectangular-shaped, the bend member being rectangular-shaped, wherein:
the straight piping member includes a first inner side surface and a second inner side surface each having a planar shape and corresponding respectively to an inner circumferential side and an outer circumferential side of the bend member;
the protruding member includes a first end directed toward the bend member and a second end directed away from the bend member, is disposed on the first inner side surface of the straight piping member so that the first end is positioned at the downstream end of the bend member, and comprises a top positioned between the first end and the second end to minimize a flow channel cross-sectional area of the straight piping member;
when a direction along a center axis of the straight piping member is a first direction, a distance between the first end and the second end in the first direction is denoted by "L" and a distance between the first end and the top in the first direction is denoted by "L1", 0.05L ≤ L1 ≤ 0.4L;
when a maximum internal dimension of the straight piping member is denoted by "A", 0.3A ≤ L ≤ 2A;
when an internal dimension of the straight piping member in a second direction in which the first and the second inner side surface face each other is denoted by "B" and an internal dimension of the straight piping member in a third direction orthogonal to the first direction and the second direction respectively is denoted by "C", "A" is the larger of "B" and "C";
when a height at the top in the protruding member is denoted by "h", 0.1B ≤ h ≤ 0.5B; and
when a width of the protruding member is denoted by "w", 0.8C ≤ w ≤ C.

10. The protruding member according to claim 9, composed of a plurality of protruding components arranged in the third direction, the plurality of the protruding components facing each other, wherein surfaces facing each other in the third direction of the plurality of the protruding components are flat.

11. The protruding member according to claim 10, wherein
the width of the protruding member is specified by a sum of widths of the plurality of the protruding components.

12. The protruding member according to any one of claims 9-11, being made of resin.

13. The protruding member according to any one of claims 9-11, including a plate member composing a surface on the second inner surface side, wherein a thickness of the plate member is 0.1mm or more.
